# EUROPÄISCHE PATENTSCHRIFT

(11) **EP 4 162 176 B1**
(45) Veröffentlichungstag und Bekanntmachung des Hinweises auf die Patenterteilung: **08.07.2026**
(21) Anmeldenummer: 21726909.1
(22) Anmeldetag: 19.05.2021
(51) Int. Cl.: F16H 55/36, F16H 55/49, F16H 55/40, F16H 57/04, F16D 1/096

(54) **RIEMENANTRIEB**
BELT DRIVE
ENTRAÎNEMENT À COURROIE

(30) Priorität: 05.06.2020 DE 102020003412
(43) Veröffentlichungstag der Anmeldung: 12.04.2023
(73) Patentinhaber: SEW-EURODRIVE GmbH & Co. KG, 76646 Bruchsal (DE)
(72) Erfinder: MAN, Kai-Keng, 68229 Mannheim (DE)
(86) Internationale Anmeldenummer: PCT/EP2021/063369
(87) Internationale Veröffentlichungsnummer: WO 2021/244856

(56) Entgegenhaltungen:
- WO-A1-2015/035926
- DE-A1- 4 128 852
- DE-C1- 4 022 073
- DE-U1- 8 322 094
- JP-A- 2007 113 655
- JP-A- 2008 031 956

## Beschreibung

Die Erfindung betrifft einen **Riemenantrieb.**

Es ist allgemein bekannt, dass Lüfter als Axiallüfter ausführbar sind.

Aus der JP 2005 - 299 842 A ist eine verbesserte Kühlung eines Lagers bekannt.

Aus der US 2012 / 0 067 990 A1 ist eine Körnermahlmaschine bekannt.

Aus der US 1 672 835 A ist ein Antriebsmechanismus für Kühlschrankkompressoren bekannt.

Aus der JP S54 - 90 556 U ist eine Lageranordnung bekannt.

Aus der WO 2015 / 035 926 A1 ist ein Riemenrad bekannt.

Aus der JP 2008 - 031 956 A ist eine Lüfteranordnung bekannt.

Aus der JP 2014 - 173 557 A ist eine weitere Lüfteranordnung bekannt.

Aus der DE 40 22 073 C1 ist eine Riemenscheibe bekannt.

Aus der DE 10 2015 118 194 A1 ist eine Umlenkrolle bekannt.

Aus der DE 41 28 852 A1 ist eine Spannbuchse mit Klemmelement bekannt.

Aus der JP 2007 - 113 655 A ist als nächstliegender Stand der Technik ein Kompressor bekannt.

Aus der DE 10 2007 009 366 A1 ist ein Lüfterrad bekannt.

Aus der DE 10 2010 053 266 A1 ist eine Verteilergetriebeeinheit bekannt.

Aus der DE 83 22 094 U1 ist eine Keilriemenscheibe mit Kühlereinrichtung bekannt.

Der Erfindung liegt daher die Aufgabe zugrunde, einen Antrieb möglichst dynamisch auszubilden.

Erfindungsgemäß wird die Aufgabe bei dem **Riemenantrieb** nach den in Anspruch 1 angegebenen Merkmalen gelöst.

Von Vorteil ist dabei, dass der Antrieb dynamisch ausgebildet ist, da ein möglichst geringes Trägheitsmoment auf der Welle angeordnet ist. Denn der Lüfter ist integriert mit einer Riemenscheibe ausgeführt. Somit müssen nicht zwei separate Teile, sondern ein einziges Teil bereitgestellt werden. Allerdings fungieren die Lüfterflügel nicht nur zur Förderung eines Luftstroms, sondern auch zur Durchleitung eines Drehmoments vom Innenring zum Außenring. Denn die Welle treibt über den Klemmring, den Innenring, die Lüfterflügel und den Außenring einen Riemen an, welcher zum Antreiben einer Last verwendbar ist. Der Außenring fungiert an seiner Innenseite zur Luftleitung, also als Luftleitring. Hierzu ist er entweder innen kreiszylindrisch geformt oder düsenartig, also rotationssymmetrisch und/oder glatt und/oder mit einer Verengung.

Der Riemen ist mehrteilig ausgeführt und somit zur Übertragung eines hohen Drehmoments vorgesehen.

Bei einer vorteilhaften Ausgestaltung ist im Innenring ein Klemmring aufgenommen, insbesondere in den Innenring ein Klemmring eingesteckt,
wobei der Klemmring mit der Welle formschlüssig, insbesondere mittels Passfederverbindung, und/oder kraftschlüssig verbunden ist. Von Vorteil ist dabei, dass eine einfache und sichere Verbindung realisiert ist. Bei Versagen einer der Verbindungen bleibt die drehfeste Verbindung noch erhalten. Somit ist der Lüfter mit der Welle mit erhöhter Sicherheit drehfest verbunden.

Bei einer vorteilhaften Ausgestaltung sind die Rillen jeweils auf dem gleichen Radialabstand angeordnet, wobei der Radialabstand auf die Drehachse der Welle bezogen ist.

Von Vorteil ist dabei, dass die Riementeile gleichartig ausgeführt sind und jeweils dasselbe Drehmoment übertragbar ist.

Bei einer vorteilhaften Ausgestaltung ist der Lüfter ein Axiallüfter, insbesondere wobei die Lüfterflügel derart ausgeformt und angeordnet sind, dass der Lüfter als Axiallüfter wirksam ist. Von Vorteil ist dabei, dass der Luftstrom axial auf die äußere Oberfläche des Getriebes trifft und dort entlang geleitet wird. Somit sind eine verbesserte Kühlung und dadurch eine kompaktere Bauweise bei gleicher Leistung ermöglicht.

Bei einer vorteilhaften Ausgestaltung ist der Lüfter ein Radiallüfter, insbesondere wobei die Lüfterflügel derart ausgeformt und angeordnet sind, dass der Lüfter als Radiallüfter wirksam ist. Von Vorteil ist dabei, dass mittels eines Abdeckteils der Luftstrom zielgerichtet vom Lüfter auf eine besonders thermisch beanspruchte Stelle des Getriebes leitbar ist.

Bei einer vorteilhaften Ausgestaltung sind die Rillen jeweils als in Umfangsrichtung ununterbrochen umlaufende Ringnuten ausgeführt. Von Vorteil ist dabei, dass eine einfache Herstellung ermöglicht ist.

Bei einer vorteilhaften Ausgestaltung ist der Innenring elastisch verformt auf die Welle aufgedrückt, insbesondere auf die Welle aufgeschrumpft. Von Vorteil ist dabei, dass eine spielfreie Verbindung mit höherer Sicherheit erreichbar ist.

Bei einer vorteilhaften Ausgestaltung sind eine oder mehrere, insbesondere axial gerichtete, Gewindebohrungen vorgesehen, welche jeweils teilweise im Innenring und teilweise im Klemmring angeordnet ist,
wobei der von der jeweiligen Gewindebohrung überdeckte, Radialabstandsbereich sowohl mit dem von dem Innenring überdeckten Radialabstandsbereich als auch mit dem von dem Klemmring überdeckten Radialabstandsbereich überlappt,
wobei der Radialabstand auf die Drehachse der Welle bezogen ist, wobei die axiale Richtung auf die Drehachse der Welle bezogen ist,
wobei der Klemmring radial innerhalb des Innenrings angeordnet ist. Von Vorteil ist dabei, dass der lichte Innendurchmesser beim Einschrauben der jeweiligen Schraube in die jeweilige Gewindebohrung aufgeweitet wird, also vergrößert wird und somit der Klemmring radial zusammengedrückt wird.

Bei einer vorteilhaften Ausgestaltung verformt elastisch eine in eine der Gewindebohrungen eingeschraubte Schraube des Antriebs den Klemmring, insbesondere wobei der Klemmring auf die Welle aufgeschrumpft wird. Von Vorteil ist dabei, dass beim elastischen Aufweiten der Gewindebohrung der Klemmring radial auf die Welle aufgeschrumpft wird.

Bei einer vorteilhaften Ausgestaltung umfasst der von der Schraube in axialer Richtung überdeckte Bereich den von den Lüfterflügeln in axialer Richtung überdeckten Bereich, wobei die axiale Richtung auf die Drehachse der Welle bezogen ist. Von Vorteil ist dabei, dass der Bereich der Verbindung zwischen Innenring und Klemmring größer ist als der Bereich der Durchleitung und Weiterleitung von Drehmoment an die Lüfterflügel.

Bei einer vorteilhaften Ausgestaltung ist der Lüfter derart geeignet im Antrieb angeordnet, dass der vom Lüfter geförderte Luftstrom entlang eines Gehäuses des Riemenantriebs entlangströmt. Von Vorteil ist dabei, dass eine verbesserte Kühlung des Getriebes erreichbar ist und somit eine effizientere Ausführung ermöglicht ist. Insbesondere ist dadurch eine kompaktere Ausführung ermöglicht, weil bei gleicher Leistung ein geringeres Bauvolumen notwendig ist.

Erfindungsgemäß sind die Speichen aus einem ersten Material ausgeführt und die restlichen Lüfterflügel aus einem zweiten Material ausgeführt,
wobei das erste Material unterschiedlich zum zweiten Material ist. Von Vorteil ist dabei, dass die Lüfterflügel aus Kunststoff und die Speichen aus Metall ausbildbar sind und somit das Trägheitsmoment verringerbar ist.

Bei einer vorteilhaften Ausgestaltung sind der Innenring, der Außenring und die Lüfterflügel einteilig, insbesondere einstückig, hergestellt, insbesondere als additiv gefertigtes Teil, insbesondere als 3D-gedrucktes Teil. Von Vorteil ist, dass Hinterschneidungen herstellbar sind, die durch den Versatz der Flügel am Umfang bewirkt sind.

Bei einer vorteilhaften Ausgestaltung weist das erste Material eine größere Dichte auf als das zweite Material. Von Vorteil ist dabei, dass eine hohe Dynamik des Antriebs erreichbar ist, da nur wenig Trägheitsmoment mit der Welle verbunden ist.

Weitere Vorteile ergeben sich aus den Unteransprüchen.

Die Erfindung wird nun anhand von schematischen Abbildungen näher erläutert:
In der Figur 1 ist ein Lüfter eines erfindungsgemäßen Antriebs in Schrägansicht dargestellt.
In der Figur 2 ist eine zugehörige Seitenansicht des Lüfters dargestellt.
In der Figur 3 ist ein zugehöriger Querschnitt dargestellt.
In der Figur 4 sind die Lüfterflügel in Schrägansicht dargestellt.

Wie in den Figuren dargestellt, weist der Lüfter einen Innenring 1 auf, der mittels als Speichen fungierender Lüfterflügel 2 mit einem Außenring 3 verbunden ist.

Der Außenring 3 ist koaxial zum Innenring 1 ausgerichtet und radial beabstandet vom Innenring 1.

Im Innenring 1 ist ein Klemmring 5 aufgenommen, welcher eine Passfedernut aufweist, so dass der Klemmring 5 mit einer Welle eines Getriebes des Antriebs mittels Passfederverbindung formschlüssig verbindbar ist. Der Klemmring 5 ist dabei auf die Welle aufgesteckt.

Der Antrieb weist auch einen das Getriebe antreibenden Elektromotor auf.

Die Lüfterflügel 2 erstrecken sich im Wesentlichen in radialer Richtung und sind derart geformt, dass der Lüfter als Axiallüfter ausgebildet ist.

Auf diese Weise ist bei Drehbewegung der Welle ein Luftstrom vom Lüfter förderbar, der am Gehäuse des Getriebes entlang geleitet wird und somit eine Kühlung des Getriebes bewirkt.

Der Außenring 3 weist an seiner äußeren Oberfläche in Umfangsrichtung umlaufende, zueinander koaxiale, jeweils auf demselben Radialabstand angeordnete Rillen, insbesondere Ringnuten, auf. Vorzugsweise sind diese Rillen in axialer Richtung voneinander regelmäßig beabstandet.

Somit ist ein mehrteiliger Riemen vorsehbar, der in die Rillen zumindest teilweise hineinragt und durch den Lüfter antreibbar ist, so dass mit dem Riemen eine Last antreibbar ist.

Der Antrieb ist als Riemenantrieb ausgeführt.

Der von den Lüfterflügeln 2 in axialer Richtung überdeckte Bereich ist kleiner als der vom Innenring 1 in axialer Richtung überdeckte Bereich und von diesem umfasst.

Der vom Innenring 1 in axialer Richtung überdeckte Bereich ist von dem vom Außenring 3 in axialer Richtung überdeckten Bereich umfasst.

Somit ist das von den Lüfterflügeln 2 übertragene Drehmoment in axialer Richtung aufgespreizt mittels des Außenrings 3.

Der Klemmring 5 weist an einer Umfangsstelle einen radial und axial durchgehenden Schlitz auf. Außerdem sind axial gerichtete, in Umfangsrichtung voneinander beabstandete, insbesondere auf gleichem Radialabstand angeordnete, Gewindebohrungen in den Berührbereich zwischen dem Innenring 1 und dem Klemmring 5 eingebracht. Beim Einschrauben von Schrauben in die Gewindebohrungen wird der Klemmring 5 elastisch verformt und somit auf die Welle aufgeschrumpft, also kraftschlüssig verbunden mit der Welle.

Somit ist der Klemmring 5 nicht nur formschlüssig, sondern auch kraftschlüssig mit der Welle verbunden.

Der von der jeweiligen Gewindebohrung 6 überdeckte Radialabstandsbereich überlappt sowohl mit dem von dem Innenring 1 überdeckten Radialabstandsbereich als auch mit dem von dem Klemmring 5 überdeckten Radialabstandsbereich. Mittels der eingeschraubten Schrauben ist somit nicht nur ein kraftschlüssiges Verbinden, insbesondere Aufschrumpfen, des Klemmrings 5 mit der Welle, sondern auch ein formschlüssiges Verbinden zwischen dem Klemmring 5 und dem Innenring 1 ermöglicht.

Der von den Schrauben in axialer Richtung überdeckte Bereich umfasst den von den Lüfterflügeln 2 in axialer Richtung überdeckten Bereich.

Der Radialabstand ist stets auf die Drehachse der Welle bezogen. Die axiale Richtung ist stets auf die Drehachse der Welle bezogen.

Bei weiteren erfindungsgemäßen Ausführungsbeispielen wird der Lüfter als 3D Druckteil, also additiv gefertigtes Teil, hergestellt, insbesondere aus einem einzigen oder alternativ aus zwei verschiedenen Materialien. Somit sind beispielsweise erste Lüfterflügel aus Kunststoff und zweite Lüfterflügel, die als Speichen ausgeformt sind, aus Metall gefertigt.

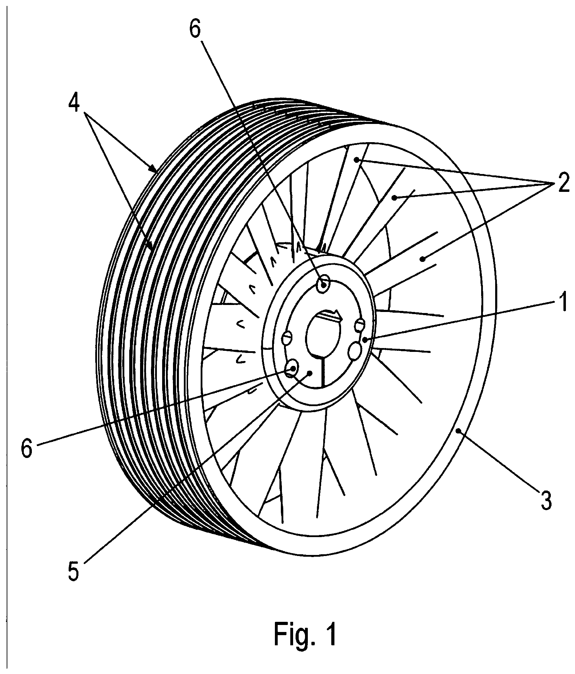

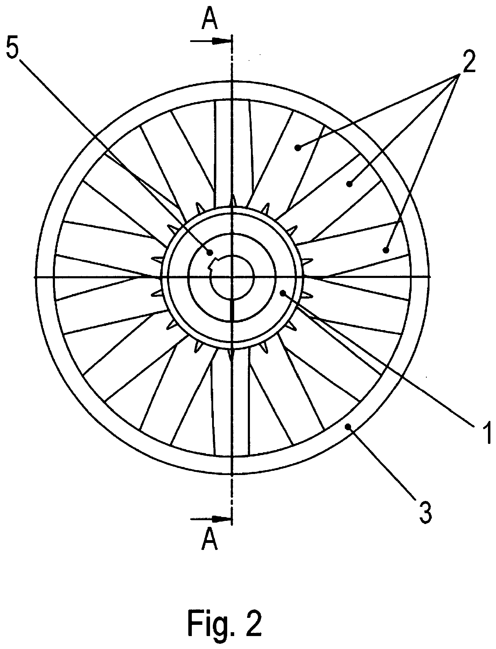

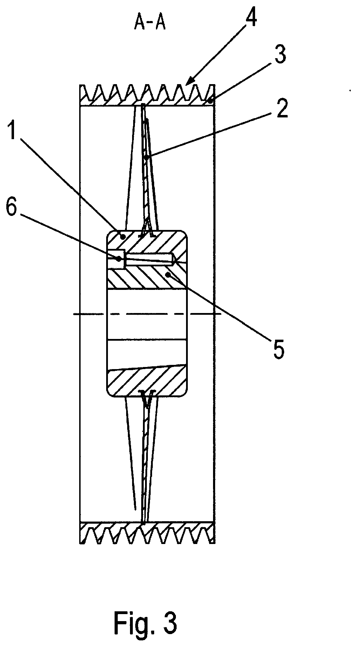

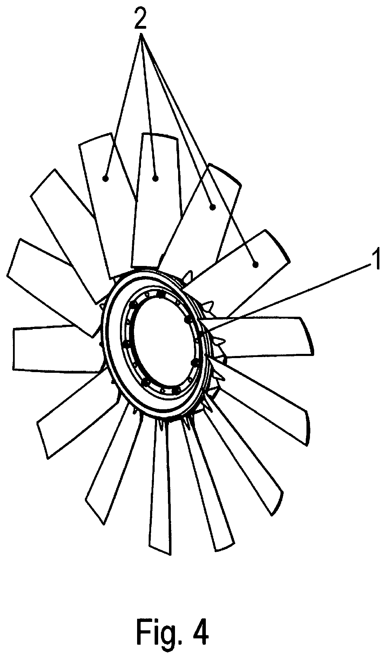

Bei weiteren erfindungsgemäßen Ausführungsbeispielen wird ein Anteil der Lüfterflügel 2 durch anders geformte Speichen ersetzt, die möglichst steif und stabil ausgeführt sind und dabei weniger oder gar nicht zur Förderung eines Luftstroms beitragen. Gewisse Lüfterflügel, insbesondere beispielsweise der erste, dritte, siebte, zehnte und vierzehnte Lüfterflügel 2 aus den Figuren 1 bis 4, werden ersetzt durch eine jeweilige Speiche, die den Innenring 1 mit dem Außenring 3 verbindet und eine Symmetrieebene aufweist, deren Normalenrichtung parallel zur Drehachse der Welle und/oder des Innenrings 1 ausgerichtet ist. Dabei ist die Speiche spiegelsymmetrisch zur Symmetrieebene ausgeführt. Insbesondere sind alle Speichen spiegelsymmetrisch zur Symmetrieebene ausgeführt.

Bei weiteren erfindungsgemäßen Ausführungsbeispielen wird der Lüfter als Radiallüfter ausgeführt.

### Bezugszeichenliste

1 Innenring
2 Lüfterflügel
3 Außenring
4 Rillen, insbesondere Ringnuten, insbesondere in Umfangsrichtung umlaufende Ringnuten
5 Klemmring
6 Gewindebohrung

## Patentansprüche

1. Riemenantrieb, aufweisend
- eine Welle,
- und
- einen mit der Welle drehfest verbundenen Lüfter,-
wobei der Lüfter einen Innenring (1) und einen Außenring (3) sowie insbesondere in Umfangsrichtung voneinander beabstandete insbesondere regelmäßig beabstandete, (3) Lüfterflügel (2) aufweist, welche jeweils mit dem Innenring (1) und mit dem Außenring **verbunden sind,**
wobei der Außenring (3) **an seiner radialen Außenseite mehrere, zueinander koaxial angeordnete** Rillen (4), insbesondere Ringnuten aufweist,
wobei der Lüfter Speichen aufweist, welche den Innenring (1) mit dem Außenring (3) verbinden,
welche spiegelsymmetrisch zu einer Ebene ausgeformt sind, deren Normalenrichtung parallel zur Drehachse der Welle ausgerichtet ist,
**dadurch gekennzeichnet, dass**
- der Riemenantrieb mehrere Riemen aufweist,
- in den Rillen (4) jeweils ein Riemen angeordnet ist,
- die Speichen aus einem ersten Material ausgeführt sind und die Lüfterflügel (2) aus einem zweiten Material ausgeführt sind, wobei das erste Material unterschiedlich zum zweiten Material ist.

2. Antrieb nach Anspruch 1,
**dadurch gekennzeichnet, dass**
im Innenring (1) ein Klemmring (5) aufgenommen ist, insbesondere in den Innenring (1) ein Klemmring (5) eingesteckt ist,
wobei der Klemmring (5) mit der Welle formschlüssig, insbesondere mittels Passfederverbindung, und/oder kraftschlüssig verbunden ist.

3. Antrieb nach einem der vorangegangenen Ansprüche,
**dadurch gekennzeichnet, dass**
die Rillen (4) jeweils auf dem gleichen Radialabstand angeordnet sind,
wobei der Radialabstand auf die Drehachse der Welle bezogen ist.

4. Antrieb nach einem der vorangegangenen Ansprüche,
**dadurch gekennzeichnet, dass**
der Lüfter ein Axiallüfter ist,
insbesondere wobei die Lüfterflügel (2) derart ausgeformt und angeordnet sind, dass der Lüfter als Axiallüfter wirksam ist.

5. Antrieb nach einem der Ansprüche 1 bis 3,
**dadurch gekennzeichnet, dass**
der Lüfter ein Radiallüfter ist,
insbesondere wobei die Lüfterflügel (2) derart ausgeformt und angeordnet sind, dass der Lüfter als Radiallüfter wirksam ist.

6. Antrieb nach einem der vorangegangenen Ansprüche,
**dadurch gekennzeichnet, dass**
die Rillen (4) jeweils als in Umfangsrichtung ununterbrochen umlaufende Ringnuten ausgeführt sind.

7. Antrieb nach Anspruch 1,
**dadurch gekennzeichnet, dass**
der Innenring (1) elastisch verformt auf die Welle aufgedrückt ist, insbesondere auf die Welle aufgeschrumpft ist.

8. Antrieb nach einem der Ansprüche 2, oder 3 bis 6 mit Bezug auf Anspruch 2,
**dadurch gekennzeichnet, dass**
eine oder mehrere, insbesondere axial gerichtete, Gewindebohrungen (6) vorgesehen sind,
welche jeweils teilweise im Innenring (1) und teilweise im Klemmring (5) angeordnet ist,
wobei der von der jeweiligen Gewindebohrung (6) überdeckte Radialabstandsbereich sowohl mit dem von dem Innenring (1) überdeckten Radialabstandsbereich als auch mit dem von dem Klemmring (5) überdeckten Radialabstandsbereich überlappt,
wobei der Radialabstand auf die Drehachse der Welle bezogen ist,
wobei die axiale Richtung auf die Drehachse der Welle bezogen ist,
wobei der Klemmring (5) radial innerhalb des Innenrings (1) angeordnet ist.

9. Antrieb nach Anspruch 8,
**dadurch gekennzeichnet, dass**
eine in eine der Gewindebohrungen (6) eingeschraubte Schraube des Antriebs den Klemmring (5) elastisch verformt,
insbesondere wobei der Klemmring (5) auf die Welle aufgeschrumpft ist.

10. Antrieb nach Anspruch 9,
**dadurch gekennzeichnet, dass**
der von der Schraube in axialer Richtung überdeckte Bereich den von den Lüfterflügeln (2) in axialer Richtung überdeckten Bereich umfasst,
wobei die axiale Richtung auf die Drehachse der Welle bezogen ist.

11. Antrieb nach einem der vorangegangenen Ansprüche,
**dadurch gekennzeichnet, dass**
der Lüfter derart geeignet im Antrieb angeordnet ist, dass der vom Lüfter geförderte Luftstrom entlang eines Gehäuses des **Riemenantriebs** entlangströmt.

12. Antrieb nach einem der vorangegangenen Ansprüche,
**dadurch gekennzeichnet, dass**
das erste Material eine größere Dichte aufweist als das zweite Material.

13. Antrieb nach einem der vorangegangenen Ansprüche,
**dadurch gekennzeichnet, dass**
der Innenring (1), der Außenring (3) und die Lüfterflügel (2) einstückig hergestellt sind.

14. Antrieb nach einem der vorangegangenen Ansprüche,
**dadurch gekennzeichnet, dass**
der von den Lüfterflügeln (2) in axialer Richtung überdeckte Bereich vom dem vom Innenring (1) in axialer Richtung überdeckten Bereich umfasst ist,
wobei die axiale Richtung auf die Drehachse der Welle bezogen ist,
und/oder dass
der vom Innenring (1) in axialer Richtung überdeckte Bereich von dem vom Außenring (3) in axialer Richtung überdeckten Bereich umfasst ist,
wobei die axiale Richtung auf die Drehachse der Welle bezogen ist.

## Claims

1. A belt drive, having
- a shaft, and
- a fan connected non-rotatably to the shaft,
wherein the fan has an inner ring (1) and an outer ring (3) and also fan blades (2) spaced apart, in particular regularly spaced apart, from each other in particular in the peripheral direction, which are in each case connected to the inner ring (1) and to the outer ring (3),
wherein the outer ring (3) has on its radial outer side a plurality of channels (4), in particular annular grooves, arranged coaxially with each other,
wherein the fan has spokes which connect the inner ring (1) to the outer ring (3), and which are formed mirror-symmetrically to a plane, the normal direction of which is oriented parallel to the axis of rotation of the shaft,
**characterised in that**
- the belt drive has a plurality of belts,
- one belt is arranged in each of the channels (4),
- the spokes are made of a first material and the fan blades (2) are made of a second material, with the first material being different from the second material.

2. A drive according to claim 1,
**characterised in that**
a clamping ring (5) is received in the inner ring (1), in particular a clamping ring (5) is inserted into the inner ring (1),
with the clamping ring (5) being connected to the shaft in a form-fit, in particular by means of a feather-key connection, and/or in a force-fit.

3. A drive according to one of the preceding claims,
**characterised in that**
the channels (4) are each arranged at the same radial distance,
with the radial distance being relative to the axis of rotation of the shaft.

4. A drive according to one of the preceding claims,
**characterised in that**
the fan is an axial fan,
in particular with the fan blades (2) being formed and arranged in such a way that the fan is effective as an axial fan.

5. A drive according to one of claims 1 to 3,
**characterised in that**
the fan is a radial fan,
in particular with the fan blades (2) being formed and arranged in such a way that the fan is effective as a radial fan.

6. A drive according to one of the preceding claims,
**characterised in that**
the channels (4) are each embodied as annular grooves encircling uninterrupted in the peripheral direction.

7. A drive according to claim 1,
**characterised in that**
the inner ring (1) is pressed, elastically deformed, onto the shaft, in particular is shrunk onto the shaft.

8. A drive according to one of claims 2, or 3 to 6 with reference to claim 2,
**characterised in that**
one or more, in particular axially directed, threaded bores (6) are provided, each of which is arranged partly in the inner ring (1) and partly in the clamping ring (5),
with the radial distance region covered by the respective threaded bore (6) overlapping both with the radial distance region covered by the inner ring (1) and with the radial distance region covered by the clamping ring (5),
with the radial distance being relative to the axis of rotation of the shaft,
with the axial direction being relative to the axis of rotation of the shaft,
with the clamping ring (5) being arranged radially within the inner ring (1).

9. A drive according to claim 8,
**characterised in that**
a screw of the drive screwed into one of the threaded bores (6) elastically deforms the clamping ring (5),
in particular with the clamping ring (5) being shrunk onto the shaft.

10. A drive according to claim 9,
**characterised in that**
the region covered in the axial direction by the screw encompasses the region covered in the axial direction by the fan blades (2),
with the axial direction being relative to the axis of rotation of the shaft.

11. A drive according to one of the preceding claims,
**characterised in that**
the fan is arranged suitably in the drive in such a way that the air stream conveyed by the fan flows along a housing of the belt drive.

12. A drive according to one of the preceding claims,
**characterised in that**
the first material has a greater density than the second material.

13. A drive according to one of the preceding claims,
**characterised in that**
the inner ring (1), the outer ring (3) and the fan blades (2) are produced in one piece.

14. A drive according to one of the preceding claims,
**characterised in that**
the region covered in the axial direction by the fan blades (2) is encompassed by the region covered in the axial direction by the inner ring (1),
with the axial direction being relative to the axis of rotation of the shaft,
and/or **in that**
the region covered in the axial direction by the inner ring (1) is encompassed by the region covered in the axial direction by the outer ring (3),
with the axial direction being relative to the axis of rotation of the shaft.

## Revendications

1. Entraînement par courroie, présentant
un arbre,
et
un ventilateur relié de manière fixe en rotation à l'arbre,
le ventilateur présentant une bague intérieure (1) et une bague extérieure (3) ainsi que, en particulier, des pales de ventilateur (2) espacées les unes des autres en direction circonférentielle, en particulier espacées régulièrement, lesquelles sont chacune reliées à la bague intérieure (1) et à la bague extérieure,
la bague extérieure (3) présentant sur sa face extérieure radiale plusieurs rainures (4) disposées coaxialement les unes par rapport aux autres, en particulier des gorges annulaires,
le ventilateur présentant des rayons qui relient la bague intérieure (1) à la bague extérieure (3), lesquels sont réalisés de manière symétrique par rapport à un plan dont la direction normale est orientée parallèlement à l'axe de rotation de l'arbre,
**caractérisé en ce que**
- l'entraînement par courroie présente plusieurs courroies,-dans les rainures (4), une courroie est disposée respectivement,
- les rayons sont réalisés à partir d'un premier matériau et les pales de ventilateur (2) sont réalisées à partir d'un second matériau, le premier matériau étant différent du second matériau.

2. Entraînement selon la revendication 1,
**caractérisé en ce que**
dans la bague intérieure (1), une bague de serrage (5) est logée, en particulier une bague de serrage (5) est insérée dans la bague intérieure (1),
la bague de serrage (5) étant reliée à l'arbre par emboîtement, en particulier au moyen d'une liaison par clavette, et/ou reliée par friction.

3. Entraînement selon l'une des revendications précédentes,
**caractérisé en ce que**
les rainures (4) sont disposées respectivement à la même distance radiale,
la distance radiale étant relative à l'axe de rotation de l'arbre.

4. Entraînement selon l'une des revendications précédentes,
**caractérisé en ce que**
le ventilateur est un ventilateur axial,
en particulier les pales de ventilateur (2) étant réalisées et disposées de telle sorte que le ventilateur soit fonctionnel en tant que ventilateur axial.

5. Entraînement selon l'une des revendications 1 à 3,
**caractérisé en ce que**
le ventilateur est un ventilateur radial,
en particulier les pales de ventilateur (2) étant réalisées et disposées de telle sorte que le ventilateur soit fonctionnel en tant que ventilateur radial.

6. Entraînement selon l'une des revendications précédentes,
**caractérisé en ce que**
les rainures (4) sont réalisées respectivement comme des gorges annulaires continues en direction circonférentielle.

7. Entraînement selon la revendication 1,
**caractérisé en ce que**
la bague intérieure (1) est montée par pression de manière déformée de manière élastique sur l'arbre, en particulier frettée sur l'arbre.

8. Entraînement selon l'une des revendications 2, ou 3 à 6 en référence à la revendication 2,
**caractérisé en ce que**
un ou plusieurs, en particulier dirigés axialement, trous taraudés (6) sont prévus, lesquels sont respectivement disposés partiellement dans la bague intérieure (1) et partiellement dans la bague de serrage (5), la zone de distance radiale recouverte par le trou taraudé (6) étant à la fois chevauchée par la zone de distance radiale recouverte par la bague intérieure (1) et par la zone de distance radiale recouverte par la bague de serrage (5), la distance radiale étant relative à l'axe de rotation de l'arbre, la direction axiale étant relative à l'axe de rotation de l'arbre,
la bague de serrage (5) étant disposée radialement à l'intérieur de la bague intérieure (1).

9. Entraînement selon la revendication 8, **caractérisé en ce que**
une vis du système, vissée dans l'un des trous taraudés (6), déforme de manière élastique la bague de serrage (5), en particulier la bague de serrage (5) étant frettée sur l'arbre.

10. Entraînement selon la revendication 9, **caractérisé en ce que** la zone recouverte par la vis en direction axiale comprend la zone recouverte par les pales de ventilateur (2) en direction axiale, la direction axiale étant relative à l'axe de rotation de l'arbre.

11. Entraînement selon l'une des revendications précédentes, **caractérisé en ce que**
le ventilateur est disposé de manière adaptée dans l'entraînement de sorte que le flux d'air transporté par le ventilateur s'écoule le long d'un carter de **l'entraînement par courroie.**

12. Entraînement selon l'une des revendications précédentes,
**caractérisé en ce que** le premier matériau présente une densité supérieure à celle du second matériau.

13. Entraînement selon l'une des revendications précédentes, **caractérisé en ce que**
la bague intérieure (1), la bague extérieure (3) et les pales de ventilateur (2) sont fabriqués en une seule pièce.

14. Entraînement selon l'une des revendications précédentes, **caractérisé en ce que**
la zone recouverte par les pales de ventilateur (2) en direction axiale est comprise dans la zone recouverte par la bague intérieure (1) en direction axiale, la direction axiale étant relative à l'axe de rotation de l'arbre,
et/ou **en ce que** la zone recouverte par la bague intérieure (1) en direction axiale est comprise dans la zone recouverte par la bague extérieure (3) en direction axiale,
la direction axiale étant relative à l'axe de rotation de l'arbre.
